# EUROPÄISCHE PATENTSCHRIFT

(11) **EP 0 616 941 B1**
(45) Veröffentlichungstag und Bekanntmachung des Hinweises auf die Patenterteilung: **27.11.1996**
(21) Anmeldenummer: 94102962.1
(22) Anmeldetag: 28.02.1994
(51) Int. Cl.: B64C 1/14

(54) **Anordnung zur Verhinderung des selbsttätigen Öffnens einer nicht ordnungsgemäss geschlossenen und verriegelten Tür oder Klappe im Flugzeugrumpf**
System to avoid the self-opening of a door or a cover not correctly closed and locked, in an aircraft fuselage
Dispositif pour empêcher l'ouverture intempestive d'une porte ou clapet non régulièrement fermé et verrouillé, dans un fuselage d'avion

(30) Priorität: 20.03.1993 DE 4309058
(43) Veröffentlichungstag der Anmeldung: 28.09.1994
(73) Patentinhaber: Daimler-Benz Aerospace Airbus Gesellschaft mit beschränkter Haftung, 21129 Hamburg (DE)
(72) Erfinder: Klein, Bernd, D-22761 Hamburg (DE); Müller, Wolfgang, D-21643 Beckdorf (DE)
(74) Vertreter: Hansmann, Dierk, Dipl.-Ing.

(56) Entgegenhaltungen:
- EP-A- 0 321 994
- US-A- 4 552 326

## Beschreibung

Die Erfindung bezieht sich auf eine Anordnung zur Verbinderung des selbsttätigen Öffnens einer nicht ordnungsgemäß geschlossenen oder verriegelten Tür oder Klappe im Flugzeugrumpf. Sie leistet einen effizienten Beitrag zur Erhöhung der Flugsicherheit in Luftfahrzeugen.

Es sind Lösungen bekannt, bei denen die in Flugzeugen installierten Türüberwachungssysteme ihre erfaßten und ausgewerteten Informationen nur direkt an das Flugzeugüberwachungssystem im Cockpit liefern, die dort visuell zur Anzeige gebracht werden. Um Fehlhandlungen des Cockpitpersonales infolge möglicher Fehlinterpretationen oder Falschmeldungen auszuschließen, sind mechanisch bedienbare Belüftungsklappen in jeder Tür des Flugzeuges angeordnet, die mit der Schließ- und Verriegelungsmechanik der Tür verbunden sind. Diese Belüftungsklappen sind federbelastet und öffnen sich, wenn ein definierter Überdruck im Inneren des Flugzeugrumpfes erreicht wird. Dadurch stellt sich ein Druckausgleich zwischen dem Rumpfinneren und der äußeren Umgebung des Flugzeuges ein. Ihre Betätigung erfolgt nur, wenn die jeweilige Tür nicht ordentlich geschlossen und verriegelt ist. Diese Lösungen besitzen einerseits den Nachteil, daß das Cockpitpersonal zwangsläufig immer richtige Aktionen auszuteilen hat, um einen Druckaufbau im Flugzeuginneren zu verhindern, da ansonsten eine Gefährdung aller an Bord des Flugzeuges befindlichen Personen infolge eines nicht initierten Druckausgleiches erfolgt. Um diese kritische Situation auszuschließen und eine notwendige Sicherheit für alle Beteiligten an Bord zu garantieren, sind eben die genannten Belüftungsklappen in der bekannten Weise funktionell eingesetzt. Zum anderen besitzen derartige Lösungen noch einen weiteren Nachteil, indem jede Tür des Flugzeugrumpfes mit den genannten Belüftungsklappen zwangsläufig auszurüsten ist. Deren Funktion ist an eine zusätzliche Mechanik inclusive diverser Hebelgetriebe gebunden, wobei eine separate Betätigung der Belüftungsklappen den Bedienungsaufwand zusätzlich erhöht und eine Gewichtserhöhung infolge der genannten Mittel entsteht. Da die Belüftungsklappen zuverlässig funktionieren sollen, sind zusätzliche Wartungsarbeiten erforderlich, um die Gefahr der Blockierung oder des Versagens infolge Verschleißerscheinungen, die dieses Erscheinungsbild wegen ebenfalls zusätzlich wirkender Korrosion ungünstig mit unterstützt, weitestgehend auszuschließen.

Bekannte Türüberwachungssysteme in Flugzeugen sind aus den EP 0 321 994, US 4,915,326 und US 4,552,326 bekannt. Alle drei Lösungen offenbaren eine Einrichtung, mit der bei internem Druckaufbau der Flugzeugtüren oder durch anderen Parameter letztere verriegelt werden. Nach der US 4,552,326 wird die Tür entweder mechanisch über einen Sperrbolzen, den man mit einer Betätigungspneumatik bedient, oder nach den EP 0 321 994 und US 4,915,326 über Sperrklinken, die elektrisch bedient werden, verriegelt. Bei diesen Lösungen baut man einen Druck auf, der die Verriegelung einer Flugzeugtür realisiert, aber gleichzeitig deren Öffnen verhindert. Derartige Lösungen gestatten in diesem Zustand kein Öffnen derartig betriebener Flugzeugtüren. Eine Druckregelung, die den aktuellen Druckzustand der Flugzeugtür so beeinflußt, daß eine veränderte Bewegung der Flugzeugtür(en) aus einen geschlossenen in einen geöffneten Zustand möglich wird, sowie eine Regelung der Verhinderung eines Druckaufbaus im Flugzeugrumpf blieb nachteiligerweise unberücksichtigt.

Demgemäß liegt der Erfindung die Aufgabe zugrunde, eine gattungsgemäße Anordnung derart zu gestalten, daß mit ihr die vollautomatische Regulierung der Verhinderung eines Druckaufbaus der Luft in einem Flugzeugrumpf in der Startsituation mit einer oder mehreren nicht ordnungsgemäß geschlossenen und verriegelten Rumpftüren oder Rumpfzugangsklappen möglich ist. Die Anordnung soll so arbeiten, daß ein selbsttätiges Öffnen bereits einer Rumpftür oder Rumpfzugangsklappe durch einen im Flugzeugrumpf aufgebauten Überdruck der Luft absolut auszuschließen ist, da ansonsten eine unerwartete Zerstörung von Flugzeugstrukturkomponenten infolge explosionsartigen Druckausgleiches beim Öffnen der Tür oder Zugangsklappe eintritt, der ungünstigerweise zu einem Flugzeugtotalverlust führen kann. Die Anordnung soll absolut zuverlässig arbeiten und keinen speziellen Wartungsaufwand benötigen. Die Anordnung soll gegenüber den traditionellen bekannten Lösungen gewichtsmindernd sein und einen geringeren Fertigungs- und Einrüstungsaufwand erfordern.

Diese Aufgabe für eine Anordnung zur Verhinderung des selbsttätigen Öffnens einer nicht ordnungsgemäß geschlossenen und verriegelten Tür oder Klappe im Flugzeugrumpf mit einem Türüberwachungssystem, das mit bestimmten Regeleinrichtungen, die entsprechende physikalische Zustandsinformationen aus dem Rumpfinneren des Flugzeuges bereitstellen, in Verbindung steht, wobei das Türüberwachungssystem und die Regeleinrichtungen an geeigneter Stelle im Flugzeugrumpf angeordnet sind, bei der das Türüberwachungssystem aus einer Türüberwachungsregeleinrichtung und mehreren Sensoren, die in den Rumpftüren des Flugzeuges installiert sind, besteht, bei der jeder Rumpftür mindestens ein Sensor zugeordnet ist, die bei mehr als einem Sensor zu einer Sensoreinheit zusammengefaßt und mit der Türüberwachungsregeleinrichtung, deren funktioneller Aufbau wenigstens einen Kanal aufweist, verbunden sind, wobei die den Rumpftüren zugeordneten Sensoren oder Sensoreneinheiten den Gesamtstatus der Rumpftüren meßtechnisch erfassen und den Kanälen der Türüberwachungsregeleinrichtung zuleiten, bei der alle Verbindungen elektrisch und / oder optisch leitend und mittels Signalleitungen realisiert sind, wird dadurch gelöst, daß die Türüberwachungsregeleinrichtung ausgangsseitig mit einer Kabinendruckregeleinrichtung und / oder einer Kabinentemperaturregeleinrichtung und / oder einer Zapfluftregeleinrichtung verbunden ist, wobei die Zapfluftregeleinrichtung zur Regelung der Entnahme der Zapfluft von den Triebwerken und / oder Hilfstriebwerken angeordnet ist, daß wenigstens eine Verbindung, die Informationen zur Bestimmung des Flugbetriebszustandes bereitstellt, mit der Kabinendruckregeleinrichtung und / oder der Kabinentemperaturregeleinrichtung und / oder der Zapfluftregeleinrichtung verbunden ist.

Die Kabinendruckregeleinrichtung ist aus einem ersten und einem zweiten Kabinendruckregler aufgebaut. Dem einen Ausgang des ersten Kabinendruckreglers und dem einen Ausgang des zweiten Kabinendruckreglers ist ein vorderes Auslaßventil parallelgeschalten. Dem anderen Ausgang des ersten Kabinendruckreglers und dem anderen Ausgang des zweiten Kabinendruckreglers ist ein hinteres Auslaßventil parallelgeschalten.

Ein erster Eingang der beiden Kabinendruckregler ist leitungsmäßig an einen ersten Knotenpunkt, gelegt, der der einen Signalleitung zugeordnet ist. Ein zweiter Eingang der beiden Kabinendruckregler ist leitungsseitig an einen zweiten Knotenpunkt geführt, der einer weiteren Signalleitung zugeordnet ist.

Diese beide Knotenpunkte sind mit einem dritten und einem vierten Knotenpunkt verbunden, wobei zwischen dem ersten und dem dritten Knotenpunkt sowie zwischen dem zweiten und dem vierten Knotenpunkt eine Verbindung mittels der beiden Signalleitungen besteht. Der dritte und der vierte Knotenpunkt ist mit dem entsprechend zugeordneten Kanalausgang der beiden Kanalausgänge der Türüberwachungsregeleinrichtung verbunden.

Die Kabinentemperaturregeleinrichtung ist aus einem ersten und einem zweiten Kabinentemperaturregler aufgebaut. Dem einen Ausgang des ersten Kabinentemperaturreglers und dem einen Ausgang des zweiten Kabinentemperaturreglers ist ein erstes Durchflußregelventil parallelgeschalten. Ein zweites Durchflußregelventil ist dem anderen Ausgang des ersten Kabinentemperaturreglers und dem anderen Ausgang des zweiten Kabinentemperaturreglers parallelgeschalten. Die beiden Eingänge der Kabinentemperaturregler sind leitungsmäßig an einen der einen Signalleitung zugeordneten fünften Knotenpunkt und an einen der weiteren Signalleitung zugeordneten sechsten Knotenpunkt geführt, die mit dem der einen Signalleitung zugeordneten dritten Knotenpunkt und mit dem der weiteren Signalleitung zugeordneten vierten Knotenpunkt verbunden und an die beiden Kanalausgänge der Türüberwachungsregeleinrichtung gelegt sind.

Die beiden Eingänge der Zapfluftregeleinrichtung sind leitungsmäßig an den dritten und vierten Knotenpunkt, die der einen und der weiteren Signalleitung zugeordnet sind, gelegt und mit den beiden Kanalausgängen der Türüberwachungsregeleinrichtung verbunden.

An einen separaten Eingang der beiden Kabinendruckregler und der beiden Kabinentemperaturregler und der Zapfluftregeleinrichtung ist je eine Verbindung gelegt, über die entsprechende Informationen zur Bestimmung des Flugbetriebszustandes abrufbar sind.

Die Zapfluftregeleinrichtung ist aus einem Zapfluftregler aufgebaut, der ausgangsseitig mit einem Zapfluftabschaltventil leitungsmäßig verbunden ist. Die beiden Eingänge des Zapfluftregler sind leitungsmäßig an den dritten und vierten Knotenpunkt gelegt und mit den beiden Kanalausgängen der Türüberwachungsregeleinrichtung verbunden. An den separaten Eingang des Zapfluftreglers ist eine Verbindung gelegt, über die entsprechende Informationen zur Bestimmung des Flugbetriebszustandes abrufbar sind.

Die durch die Erfindung erreichten Vorteile sind im wesentlichen darin zu sehen, daß die Anordnung vollautomatisch regelt und absolut den erhöhten Sicherheitsanforderungen der Luftfahrtindustrie entspricht. Sie ist ohne besonderen technologischen Aufwand realisier- und in die Flugzeuge einrüstbar. Ihre hohe Zuverlässigkeit gepaart mit gewichtsmindernd wirkenden Faktoren im Luftfahrzeugbau weist auf eine breite Anwendbarkeit in allen Flugzeugtypen.

Die Erfindung ist anhand der Zeichnungen dargestellt und in einem Ausführungsbeispiel näher beschrieben. Es zeigen
- Fig.1: die erfindungsgemäße Anordnung in einem Blockschaltbild;
- Fig.2: die spezielle Anordnung nach Fig.1;
- Fig.3: die Anordnung der Mittel nach Fig.2 im Flugzeug.

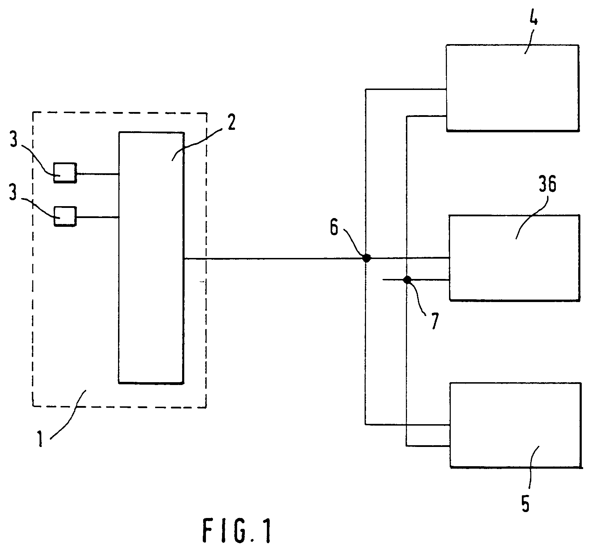

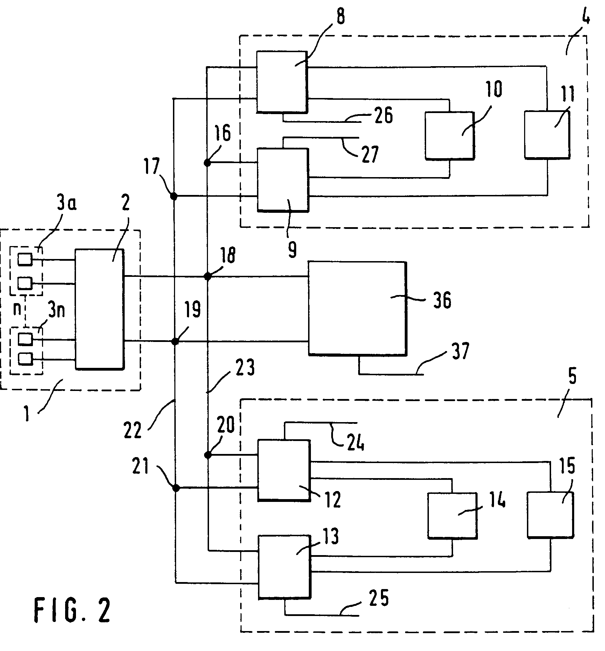

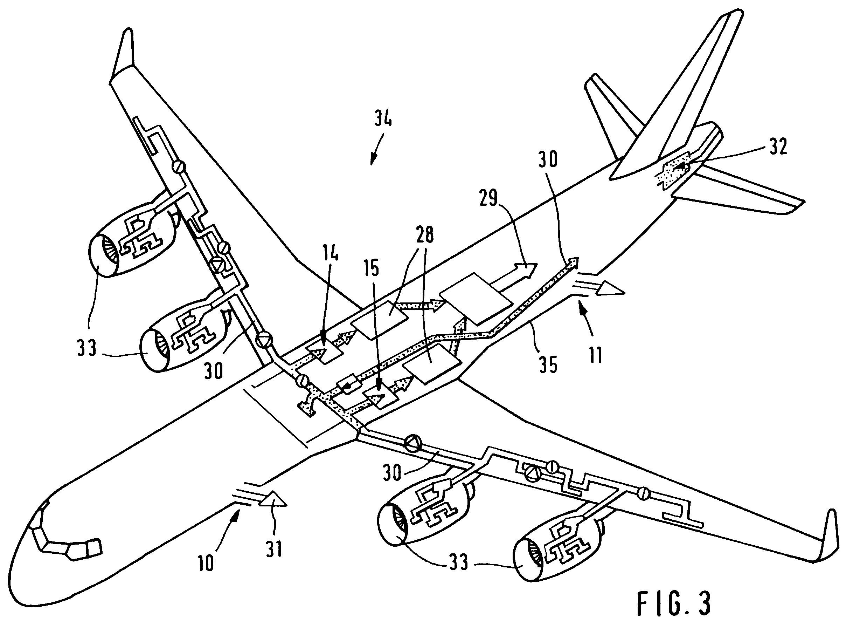

An einem Ausführungsbeispiel soll die erfindungsgemäße Anordnung näher erläutert werden. In der Fig.1 ist die Anordnung zur Verhinderung des selbsttätigen Öffnens einer nicht ordnungsgemäß geschlossenen und verriegelten Tür oder Klappe im Flugzeugrumpf 35 in einem Blockschaltbild dargestellt, das in der Fig.2 in einer speziellen Anordnung sich ausführlicher manifestiert. Die Fig.3 läßt die einzelnen Elemente der Anordnung teilweise in und am Flugzeugrumpf (35) sowie bedingt deren Einordnung und besonderen Funktionen im technologischen Ablauf der Klimatisierung und Luftversorgung inclusive Druckregulierung eines Flugzeuges 34 erkennen.

Nach Fig.1 besteht die Anordnung aus einem Türüberwachungssystem 1, einer Kabinendruckregeleinrichtung 4, einer Kabinentemperaturregeleinrichtung 5 und einer Zapfluftregeleinrichtung 36, die mittels Signalleitungen miteinander verbunden sind. Das Türüberwachungssystem 1 umfaßt eine Türüberwachungsregeleinrichtung 2, die mit mehreren Sensoren 3 über Signalleitungen in Verbindung steht. Die Sensoren sind zu Sensoreneinheiten 3a bis 3n zusammnengefaßt, wie aus Fig.2 ersichtlich ist. Die Sensoren 3 sind in den Rumpftüren des Flugzeuges 34 installiert und erfassen meßtechnisch den Gesamtstatus der Rumpftüren und / oder Rumpfzugangsklappen.

Jeder dieser Rumpftüreneinheit sind zwei Sensoren 3, die eben zu einer Sensoreneinheit 3a zusammengefaßt sind, zugeordnet; das bedeutet, bei einer Anzahl von n- zähligen Rumpftüren incl. Rumpfzugangsklappen sind n- Sensoreneinheiten 3n angeordnet. Die in jeder Rumpftür praktisch angeordneten Meßfühler einer Sensoreinheit 3a bis 3n übersenden nach Abruf ihre aktuell erfaßten Zustandswerte an die aus zwei Kanälen aufgebauten Türüberwachungsregeleinrichtung 2. Die signalisierten Meßergebnisse der bis zu n- zähligen Rumpftüren incl. Rumpfzugangsklappen werden von beiden Kanälen erfaßt und verglichen.

Ergibt der Vergleich der Signale, daß ein ungleicher Status der Rumpftüreneinheiten aktuell ist, dann fällt die Türüberwachungseinrichtung 2 in eine sichere Position zurück, da nicht mehr Klar ist, welche Signale dem gestörten Status zuzuordnen sind. Praktisch ergibt dieser Meßwertvergleich, daß beispielsweise mindestens eine der Rumpftüren und / oder Rumpfzugangsklappen offen oder nicht ordentlich geschlossen oder verriegelt ist. Sind die n- zähligen Rumpftüreinheiten vorschriftsmäßig geschlossen und verriegelt, dann wird dieser Gesamtstatus in den Kanälen nach entsprechender Auswertung und Registrierung ausgangsseitig bereitgestellt.

Der kanalausgangsseitig anliegende Gesamtstatus der Rumpftüreinheiten wird einerseits im Cockpit vom dort installierten Flugzeugüberwachungssystem angezeigt aber andererseits primär zur Weiterverarbeitung der Kabinendruckregeleinrichtung 4, der Kabinentemperaturregeleinrichtung 5 und der Zapfluftregeleinrichtung 36 zugeleitet. Das geschieht über eine an den Kanalausgängen der Türüberwachungsregeleinrichtung 2 anliegende Verbindung, die zu einem hier im Blockschaltbild der Fig.1 gezeigten Knotenpunkt 6 geführt ist, von dem die entsprechenden Verbindungen eingangsseitig die Kabinendruckregeleinrichtung 4, die Kabinentemperaturregeleinrichtung 5 und die Zapfluftregeleinrichtung 36 erreichen. Die letztgenannten Regeleinrichtungen 4, 5, 36 erhalten zusätzlich über eine elektrische und / oder optische Signalleitung, die an einem Knotenpunkt 7 im Blockschaltbild liegt und mit einer Fahrwerkskontrolleinrichtung und einer Triebwerksüberwachungseinrichtung verbunden ist, die notwendigen Informationen zur Bestimmung des Flugbetriebszustandes. Diese Signale werden über Signalleitungen, die mit dem Knotenpunkt 7 verbunden diesen Regeleinrichtungen 4, 5, 36 zugeleitet.

Die Fig.2 knüpft grundsätzlich an den im Blockschaltbild nach Fig.1 dargestellten Aufbau der Anordnung an. Das Schaltbild der Fig.2 zeigt speziell den Aufbau der Kabinendruck-, der Kabinentemperatur- und der Zapfluftregeleinrichtung 4, 5, 36. Danach besteht die Kabinendruckregeleinrichtung 4 aus zwei Kabinendruckreglern 8, 9 . Letztere sind ausgangsseitig mit zwei Auslaßventile 10, 11 verbunden. Die Auslaßventile 10, 11 sind zu deren Öffnen und Schließen elektronisch regelbar, wobei die elektrischen Anschlüsse der Regelung jeweils einem Ausgang der beiden Kabinendruckregler 8, 9 parallelgeschalten sind. So liegt der eine Anschluß des vorderen Auslaßventiles 10 auf dem einen Ausgang des ersten Kabinendruckreglers 8 und der andere Anschluß des gleichen Ventiles 10 auf dem einen Ausgang des zweiten Kabinendruckreglers 9.

Die verbleibenden beiden anderen Ausgänge der Kabinendruckregler 8,9 sind der Verbindung mit den Anschlüssen des hinteren Auslaßventiles 11 vorbehalten. Die beiden einen Eingänge der Kabinendruckregler 8, 9 sind an einen ersten Knotenpunkt 16 und die beiden anderen Eingänge der Kabinendruckregler 8, 9 sind an einen zweiten Knotenpunkt 17 mittels Signalleitungen geführt. Diese beiden Knotenpunkte 16, 17 sind mit einem dritten und einem vierten Knotenpunkt 18, 19 verbunden, wobei eine Signalleitung 23 den ersten und dritten Knotenpunkt 16, 18 und eine weitere Signalleitung 22 den zweiten und vierten Knotenpunkt 17, 19 verbindet.

Weiterhin besteht die Kabinentemperaturregeleinrichtung 5 aus zwei Kabinentemperaturreglern 12, 13. Letztere sind ausgangsseitig mit zwei Durchflußregelventilen 14, 15 verbunden. Die Durchflußregelventile 14, 15 sind zu deren Öffnen und Schließen elektronisch regelbar wobei die elektrischen Anschlüsse der Regelung jeweils einem Ausgang der beiden Kabinentemperaturregler 12, 13 parallelgeschalten sind. So liegt der eine Anschluß des ersten Durchflußregelventiles 14 auf dem einen Ausgang des ersten Kabinentemperaturreglers 12 und der andere Anschluß des gleichen Ventiles 14 auf dem einen Ausgang des zweiten Kabinentemperaturreglers 13. Die verbleibenden beiden anderen Ausgänge der Kabinentemperaturregler 12, 13 sind der Verbindung mit den Anschlüssen des zweiten Durchflußregelventiles 15 vorbehalten. Die beiden einen Eingänge der Kabinentemperaturregler 12, 13 sind an einen fünften Knotenpunkt 20 und die beiden anderen Eingänge der Kabinentemperaturregler 12, 13 sind an einen sechsten Knotenpunkt 21 mittels Signalleitungen geführt. Diese beiden Knotenpunkte 20, 21 sind mit einem dritten und einem vierten Knotenpunkt 18, 19 verbunden, wobei eine Signalleitung 23 den fünften und dritten Knotenpunkt 20, 18 und eine weitere Signalleitung 22 den sechsten und vierten Knotenpunkt 21, 19 verbindet.
Ebenso ist je ein Eingang der Zapfluftregeleinrichtung 36 leitungsmäßig an den dritten und vierten Knotenpunkt 18, 19 gelegt und mit den beiden Kanalausgängen der Türüberwachungsregeleinrichtung 2 verbunden. Die Zapfluftregeleinrichtung 36 baut sich im Detail aus einem Zapfluftregler 38 auf. Ein Ausgang des Zapfluftreglers 38 ist leitungsmäßig mit einem Zapfluftabschaltventil 39 verbunden, das zu seinem Öffnen oder Schließen elektronisch regelbar ist. Die beiden Eingänge des Zapfluftreglers 38 sind dabei leitungsmäßig mittels Signalleitungen an den dritten und vierten Knotenpunkt 18, 19 geführt, die weiter an die beiden Kanalausgänge der Türüberwachungsregeleinrichtung 2 gelegt sind.

Ein separater Eingang des Zapfluftreglers 38 ist außerdem an eine Verbindung 37 über die leitungsmäßig mittels Signalleitung entsprechende Informationen zur Bestimmung des Flugbetriebszustandes abrufbar sind.

Die mehrfach genannten Regeleinrichtungen 4, 5, 36 erhalten, wie bereits in der Beschreibung zu Fig.1 erwähnt, zusätzlich über eine elektrische und / oder optische Signalleitung 26, 27, 24, 25, 37, die mit einer Fahrwerkskontrolleinrichtung und einer Triebwerksüberwachungseinrichtung verbunden ist, die notwendigen Informationen zur Bestimmung des Flugbetriebszustandes. Diese Signale werden beispielgemäß über separate Signalleitungen 24, 25, 26, 27, 37 diesen Regeleinrichtungen 4, 5, 36 zugeleitet.

Dabei sind die Signalleitungen 26, 27 den Kabinendruckreglern 8, 9 und die Signalleitungen 24, 25 den Kabinentemperaturreglern 12, 13 und die Signalleitung 37 der Zapfluftregeleinrichtung 36 der abrufbaren Informationsbereitstellung zur Bestimmung des Flugbetriebszustandes zugewiesen. Weiterhin wurde bezüglich der Fig.1 bereits erwähnt, daß der kanalausgangsseitig anliegende Gesamtstatus der Rumpftüreinheiten einerseits im Cockpit vom dort installierten Flugzeugüberwachungssystem angezeigt aber andererseits primär zur Weiterverarbeitung der Kabinendruckregeleinrichtung 4, der Kabinentemperaturregeleinrichtung 5 und der Zapfluftregeleinrichtung 36 zugeleitet wird. Das geschieht nach Fig.2 über an den Kanalausgängen der Türüberwachungsregeleinrichtung 2 anliegende Verbindungen, die von einem Ausgang eines ersten Kanales an den dritten Knotenpunkt 18 bzw. von einem weiteren Ausgang eines zweiten Kanales an den vierten Knotenpunkt 19 über Signalleitungen gelegt sind. Entsprechenden Verbindungen von diesen Knotenpunkten 18, 19 erreichen eingangsseitig die Kabinendruckregeleinrichtung 4, die Kabinentemperaturregeleinrichtung 5 und die Zapfluftregeleinrichtung 36.

Die Signalumsetzung des Gesamtstatuses erfolgt durch die Türüberwachungsregeleinrichtung 2 in deren kanalweise ausgangsseitigen Bereitstellung von elektrischen und / oder optischen Signalen, die über alle Leitungswege durchweg übertragen werden. Auch die Informationen zur Bestimmung des Flugzeugbetriebszustandes werden durch abrufbare elektrische und / oder optische Signale bereitgestellt.

Die Kabinendruckregler 8, 9 und die Kabinentemperaturregler 12, 13 sowie der Zapfluftregler 38 verarbeiten die ausgangsseitig der beiden Kanäle der Türüberwachungsregeleinrichtung 2 bereitgestellten Signale, die, wie bereits erwähnt, den Gesamtstatus der Rumpftüren und / oder Rumpfzugangsklappen der Rumpftüreneinheiten vermitteln. Diese Kabinendruck- und Kabinentemperaturregler 8, 9, 12, 13 und der Zapfluftregler 38 verarbeiten gleichzeitig weiterhin die Signale zur Bestimmung des Flugzeugbetriebszustandes von den (nicht gezeigten) Fahrwerkskontroll- und / oder Triebwerksüberwachungseinrichtungen. Diese Signale zeigen den Betriebszustand des Flugzeuges 34 an; insofern, ob die Triebwerke 33 sich in einem Ruhe- oder Betriebszustand befinden, d.h., ob die Triebwerksschubhebel in Startkonfiguration und ob sich das Flugzeug 34 in einer Start - Lande - oder Boden - Luft - Konfiguration, d.h., ob sich das Flugzeug 34 am Boden oder in der Luft befindet. Befindet sich das Flugzeug 34 im Betriebszustand Flug, d. h. beispielsweise mindestens ein Triebwerk 33 befindet sich im Betriebszustand, so werden die Eingangssignale der Türüberwachungsregeleinrichtung 2 an die Kabinendruck- und Kabinentemperaturregler 8, 9, 12, 13 und den Zapfluftregler 38 weiter gegeben und in diesen elektronisch ausgewertet. In diesem Fall erfolgt ausgangsseitig der Kabinendruckregler 8, 9 die Abgabe elektrischer und / oder optischer Stellsignale zur Positionskontrolle an die zweigeteilten Auslaßregelventile 10, 11, wobei jeweils ein Teil dem ersten oder zweiten Kabinendruckregler 8, 9 zugeordnet ist, und die Stellsignale bewirken das vollständige Öffnen der Auslaßventile 10, 11 und stellen somit die größtmöglichen Ausströmquerschnitte sicher.

Die verfahrensgemäße Arbeitsweise der Kabinentemperaturregler 12, 13 erfolgt in der Weise, indem die übermittelten Kanalausgangssignale der Türüberwachungsregeleinrichtung 2 von den beiden Kabinentemperaturreglern 12, 13 eingangsseitig erfaßt und gemischt mit den Signalen zur Bestimmung des Flugzeugbetriebszustandes verarbeitet und dann in Stellsignale zum Schließen der Durchflußregelventile 14, 15 gewandelt werden und somit die Frischluftzuführ in den Flugzeugrumpf 35 unterbrochen wird.
Die verfahrensgemäße Arbeitsweise des Zapfluftreglers 38 gestaltet sich in der Weise, indem die übermittelten Kanalausgangssignale der Türüberwachungsregeleinrichtung 2 vom Zapfluftregler 38 eingangsseitig erfaßt und gemischt mit den Signalen zur Bestimmung des Flugzeugbetriebszustandes verarbeitet und dann in Stellsignale zum Schließen des Zapfluftabschaltventiles 39 gewandelt werden und somit die Frischluftzufuhr in den Flugzeugrumpf 35 unterbrochen wird.

Aus der Fig.3 ist im wesentlichen die Anordnung der Durchflußventile 14, 15, die von den (nicht gezeigten) Kabinentemperaturreglern 12, 13 beeinflußt werden und deren Einbindung in die Frischluftleitungen 30 ersichtlich. Die Anordnung des vorderen und des hinteren Ausslaßventiles 10, 11, die durch die (nicht gezeigten) Kabinendruckreglern 8, 9 beeinflußbar sind sowie die Anordnung des Zapfluftabschaltventiles 39, das durch den (nicht gezeigten) Zapfluftregler 38 beeinflußbar ist, ist ebenfalls dieser Darstellung entnehmbar. Die weiteren Mittelangaben im und am Flugzeug 34 dienen der Darstellung und dem Verständnis funktioneller Abläufe, im besonderen der Luftversorgung und Klimatisierung inclusive Druckregulierung im Flugzeugrumpf 35.

### Bezugszeichen

- 1: Türüberwachungssystem
- 2: Türüberwachungsregeleinrichtung
- 3: Sensor
- 3a: Sensoreneinheit
- 3n: n - te Sensoreneinheit
- 4: Kabinendruckregeleinrichtung
- 5: Kabinentemperaturregeleinrichtung
- 6, 7, 16, 17, 18, 19, 20, 21,: Knotenpunkt
- 8, 9: Kabinendruckregler
- 10: vorderes Auslaßventil
- 11: hinteres Auslaßventil
- 12, 13: Kabinentemperaturregler
- 14, 15: Durchflußregelventil
- 24, 25, 26, 27 37: Anschlußleitung zur Bestimmung des Flugzeugbetriebszustandes
- 22, 23: Signalleitung
- 28: Kabinerluftaufbereitungsaggregate
- 29: Kabinenlufteinströmung
- 30: Frischluftleitung
- 31: Kabinenluftausströmung
- 32: Hilfstriebwerk
- 33: Triebwerk
- 34: Flugzeug
- 35: Flugzeugrumpf
- 36: Zapfluftregeleinrichtung
- 38: Zapfluftregler
- 39: Zapfluftabschaltventil

## Patentansprüche

1. **Anordnung zur Verhinderung des selbsttätigen Öffnens einer nicht ordnungsgemäß geschlossenen und verriegelten Tür oder Klappe im Flugzeugrumpf (35)** mit einem Türüberwachungssystem (1), das mit bestimmten Regeleinrichtungen, die entsprechende physikalische Zustandsinformationen aus dem Rumpfinneren des Flugzeuges (34) bereitstellen, in Verbindung steht, wobei das Türüberwachungssystem (1) und die Regeleinrichtungen an geeigneter Stelle im Flugzeugrumpf (35) angeordnet bei der das Türüberwachungssystem (1) aus einer Türüberwachungsregeleinrichtung (2) und mehreren Sensoren (3), die in den Rumpftüren des Flugzeuges (34) installiert sind, besteht, bei der jeder Rumpftür mindestens ein Sensor (3) zugeordnet ist, die bei mehr als einem Sensor (3) zu einer Sensoreinheit (3n) zusammengefaßt und mit der Türüberwachungsregeleinrichtung (2), deren funktioneller Aufbau wenigstens einen Kanal aufweist, verbunden sind, wobei die den Rumpftüren zugeordneten Sensoren (3) oder Sensoreinheiten (3n) den Gesamtstatus der Rumpftüren meßtechnisch erfassen und den Kanälen der Türüberwachungsregeleinrichtung (2) zuleiten, bei der alle Verbindungen elektrisch und / oder optisch leitend und mittels Signalleitungen realisiert sind, **dadurch gekennzeichnet**, daß die Türüberwachungsregeleinrichtung (2) ausgangsseitig mit einer Kabinendruckregeleinrichtung (4) und / oder einer Kabinentemperaturregeleinrichtung (5) und / oder einer Zapfluftregeleinrichtung (36) verbunden ist, daß wenigstens eine Verbindung, die Informationen zur Bestimmung des Flugbetriebszustandes bereitstellt, mit der Kabinendruckregeleinrichtung (4) und / oder der Kabinentemparaturregeleinrichtung (5) und / oder der Zapfluftregeleinrichtung (36) verbunden ist.

2. Anordnung nach Anspruch 1, **dadurch gekennzeichnet**, daß die Kabinendruckregeleinrichtung (4) aus einem ersten und einem zweiten Kabinendruckregler (8; 9) aufgebaut ist, daß dem einen Ausgang des ersten Kabinendruckreglers (8) und dem einen Ausgang des zweiten Kabinendruckreglers (9) ein vorderes Auslaßventil (10) sowie dem anderen Ausgang des ersten Kabinendruckreglers (8) und dem anderen Ausgang des zweiten Kabinendruckreglers (9) ein hinteres Auslaßventil (11) parallelgeschalten ist, wobei die beiden Eingänge der Kabinendruckregler (8; 9) leitungsmäßig an einen einer Signalleitung (23) zugeordneten ersten Knotenpunkt (16) und an einen einer weiteren Signalleitung (22) zugeordneten zweiten Knotenpunkt (17) geführt sind, die mit einem der einen Signalleitung (23) zugeordneten dritten Knotenpunkt (18) und mit einem der weiteren Signalleitung (22) zugeordneten vierten Knotenpunkt (19) verbunden und an die beiden Kanalausgänge der Türüberwachungsregeleinrichtung (2) gelegt sind.

3. Anordnung nach Anspruch 1, **dadurch gekennzeichnet**, daß die Kabinentemperaturregeleinrichtung (5) aus einem ersten und einem zweiten Kabinentemperaturregler (12; 13) aufgebaut ist, daß dem einen Ausgang des ersten Kabinentemperaturreglers (12) und dem einen Ausgang des zweiten Kabinentemperaturreglers (13) ein erstes Durchflußregelventil (14) sowie dem anderen Ausgang des ersten Kabinentemperaturreglers (12) und dem anderen Ausgang des zweiten Kabinentemperaturreglers (13) ein zweites Durchflußregelventil (15) parallelgeschalten ist, wobei die beiden Eingänge der Kabinentemperaturregler (12; 13) leitungsmäßig an einen der einer Signalleitung (23) zugeordneten fünften Knotenpunkt (20) und an einen der weiteren Signalleitung (22) zugeordneten sechsten Knotenpunkt (21) geführt sind, die mit dem der einen Signalleitung (23) zugeordneten dritten Knotenpunkt (18) und mit dem der weiteren Signalleitung (22) zugeordneten vierten Knotenpunkt (19) verbunden und an die beiden Kanalausgänge der Türüberwachungsregeleinrichtung (2) gelegt sind.

4. Anordnung nach den Ansprüchen 1 bis 3, **dadurch gekennzeichnet**, daß die beiden Eingänge der Zapfluftregeleinrichtung (36) leitungsmäßig an den dritten und vierten Knotenpunkt (18; 19) gelegt und mit den beiden Kanalausgängen der Türüberwachungsregeleinrichtung (2) verbunden sind.

5. Anordnung nach den Ansprüchen 1 bis 3, **dadurch gekennzeichnet,** daß an einen separaten Eingang der beiden Kabinendruckregler (8; 9) und der beiden Kabinentemperaturregler (12; 13) und der Zapfluftregeleinrichtung (36) je eine Verbindung (24, 25, 26, 27, 37) gelegt ist, über die entsprechende Informationen zur Bestimmung des Flugbetriebszustandes abrufbar sind.

6. Anordnung nach den Ansprüchen 1 und 4 und 5, **dadurch gekennzeichnet**, daß die Zapfluftregeleinrichtung (36) aus einem Zapfluftregler (38) aufgebaut ist, der ausgangsseitig mit einem Zapfluftabschaltventil (39) leitungsmäßig verbunden ist, wobei die beiden Eingänge des Zapfluftregler (38) leitungsmäßig an den dritten und vierten Knotenpunkt (18, 19) gelegt und mit den beiden Kanalausgängen der Türüberwachungsregeleinrichtung (2) verbunden sind und wobei an den separaten Eingang des Zapfluftreglers (38) eine Verbindung (37) gelegt ist, über die entsprechende Informationen zur Bestimmung des Flugbetriebszustandes abrufbar sind.

## Claims

1. Arrangement for preventing the automatic opening of a door or flap in the aircraft fuselage (35) which is not properly closed and locked, having a door-monitoring system (1) which is in communication with certain regulating devices that supply appropriate physical condition data from the interior of the fuselage of the aircraft (34), wherein the door-monitoring system (1) and the regulating devices are disposed at a suitable point in the aircraft fuselage (35), the door-monitoring system (1) consisting of a door-monitoring regulating device (2) and a number of sensors (3) that are installed in the fuselage doors of the aircraft (34), each fuselage door being associated with at least one sensor (3), which sensors, in the event of there being more than one sensor (3), are combined to form a sensor unit (3n) and are connected to the door-monitoring regulating device (2), the functional composition of which has at least one channel, and wherein the sensors (3) or sensor units (3n) associated with the fuselage doors detect the overall status of the fuselage doors by measurement techniques and pass it to the channels of the door-monitoring regulating device (2), all connections being made in an electrically and/or optically conductive manner and by means of signal lines, **characterized in that** the door-monitoring regulating device (2) is connected, on the output side, to a cabin pressure-regulating device (4) and/or to a cabin temperature-regulating device (5) and/or to a tap air-regulating device (36), and that at least one connection, which supplies data for determining the flight operating condition, is connected to the cabin pressure-regulating device (4) and/or to the cabin temperature-regulating device (5) and/or to the tap air-regulating device (36).

2. Arrangement according to claim 1, **characterized in that** the cabin pressure-regulating device (4) is composed of a first and a second cabin pressure-regulator (8; 9), and that a front outlet valve (10) is connected in parallel with the one output of the first cabin pressure-regulator (8) and with the one output of the second cabin pressure-regulator (9), and a rear outlet valve (11) is connected in parallel with the other output of the first cabin pressure-regulator (8) and with the other output of the second cabin pressure-regulator (9), wherein the two inputs of the cabin pressure-regulators (8; 9) are run, by means of lines, to a first nodal point (16) associated with a signal line (23) and to a second nodal point (17) associated with another signal line (22), which nodal points are connected to a third nodal point (18) associated with the one signal line (23) and to a fourth nodal point (19) associated with the other signal line (22), and are applied to the two channel outputs of the door-monitoring regulating device (2).

3. Arrangement according to claim 1, **characterized in that** the cabin temperature-regulating device (5) is composed of a first and a second cabin temperature-regulator (12; 13) and that a first through-flow regulating valve (14) is connected in parallel with the one output of the first cabin temperature-regulator (12) and with the one output of the second cabin temperature-regulator (13), and a second through-flow regulating valve (15) is connected in parallel with the other output of the first cabin temperature-regulator (12) and with the other output of the second cabin temperature-regulator (13), wherein the two inputs of the cabin temperature-regulators (12; 13) are run, by means of lines, to a fifth nodal point (20) associated with the one signal line (23) and to a sixth nodal point (21) associated with the other signal line (22), which nodal points are connected to a third nodal point (18) associated with the one signal line (23) and to a fourth nodal point (19) associated with the other signal line (22), and are applied to the two channel outputs of the door-monitoring regulating device (2).

4. Arrangement according to claims 1 to 3, **characterized in that** the two inputs of the tap air-regulating device (36) are applied, by means of lines, to the third and fourth nodal points (18; 19) and connected to the two channel outputs of the door-monitoring regulating device (2).

5. Arrangement according to claims 1 to 3, **characterized in that** one connection (24, 25, 26, 27, 37) in each case, via which appropriate data for determining the flight operating condition can be called up, is applied to a separate input of the two cabin pressure-regulators (8; 9) and of the two cabin temperature-regulators (12; 13) and of the tap air-regulating device (36).

6. Arrangement according to claims 1 and 4 and 5, **characterized in that** the tap air-regulating device (36) is composed of a tap air-regulator (38) which is connected on the output side, by means of lines, to a tap air shut-off valve (39), wherein the two inputs of the tap air-regulator (38) are applied, by means of lines, to the third and fourth nodal points (18, 19) and connected to the two channel outputs of the door-monitoring regulating device (2), and wherein a connection (37), via which appropriate data for determining the flight operating condition can be called up, is applied to the separate input of the tap air-regulator (38).

## Revendications

1. Dispositif destiné à empêcher l'ouverture automatique d'une porte ou d'une trappe de fuselage (35) non fermée et non verrouillée de manière convenable, comprenant un système de surveillance de porte (1) relié avec des systèmes régulateurs déterminés qui livrent des informations physiques d'état provenant de l'intérieur du fuselage de l'avion (34), le système de surveillance de porte (1) et les systèmes régulateurs étant disposés à un endroit approprié dans le fuselage (35), le système de surveillande de porte (1) étant composé d'un système régulateur de surveillance de porte (2) et de plusieurs détecteurs (3), installés dans les portes du fuselage de l'avion (34), à chacune des portes du fuselage étant adjoint au moins un détecteur (3), dans le cas de plus de un détecteur (3), ceux-ci étant réunis en un bloc détecteur (3n) et reliés avec le système régulateur de surveillance de porte dont la structure fonctionnelle présente au moins un canal, les détecteurs (3) ou les blocs détecteurs (3n) adjoints aux portes du fuselage mesurant l'état d'ensemble des portes du fuselage et transmettant ces mesures aux canaux du système régulateur de surveillance de porte (2), transmission lors de laquelle toutes les liaisons sont assurées par des connexions électriques et/ou optiques et par des circuits d'acheminement des signaux, caractérisé en ce que le système régulateur de surveillance de porte (2) est relié côté sortie avec un système régulateur de la pression de la cabine (4) et/ou avec un système régulateur de la température de la cabine (5) et/ou avec un système régulateur de l'air sous pression (36), en ce que au moins une liason, livrant les informations destinées à déterminer la situation de la navigation aérienne, est reliée avec le système régulateur de la pression de la cabine (4) et/ou avec le système régulateur de la température de la cabine (5) et/ou avec le système régulateur de l'air sous pression (36).

2. Dispositif selon la revendication 1, caractérisé en ce que le système régulateur de la pression de la cabine (4) est conçu à partir d'un premier et d'un second régulateurs manométriques de pression de la cabine (8; 9), en ce que à une sortie du premier régulateur manométrique de pression de la cabine (8) et à une sortie du second régulateur manométrique de pression de la cabine (9) est montée en parallèle une soupape de sortie avant (10), de même que à l'autre sortie du premier régulateur manométrique de pression (8) et à l'autre sortie du second régulateur manométrique de pression (9) est montée en parallèle une soupape de décharge arrière (11), les deux entrées des régulateurs manométriques de pression de la cabine (8; 9) étant reliées à un premier point de jonction (16) adjoint à un circuit d'acheminement des signaux (23) et à un second point de jonction (17) adjoint à un autre circuit d'acheminement des signaux (22), lesdits points de jonction étant reliés avec un troisième point de jonction (18) adjoint à un circuit d'acheminement des signaux (23) et avec un quatrième point de jonction (19) adjoint à l'autre circuit d'acheminement des signaux (22), et étant disposés sur les deux sorties du canal du système régulateur de surveillance de porte (2).

3. Dispositif selon la revendication 1, caractérisé en ce que le système régulateur de la température de la cabine (5) est conçu à partir d'un premier et d'un second thermorégulateurs de la cabine (12; 13), en ce que à une sortie du premier thermorégulateur de la cabine (13) et à une sortie du second thermorégulateur de la cabine (13) est montée en parallèle une première soupape de régulation d'écoulement (14), de même que à l'autre sortie du premier thermorégulateur de la cabine (12) et à l'autre sortie du second thermorégulateur de la cabine (13) est montée en parallèle une seconde soupape de régulation d'écoulement (15), les deux entrées des thermorégulateurs de la cabine (12; 13) étant reliées à un cinquième point dejonction (20) adjoint à un circuit d'acheminement des signaux (23) et à un sixième point de jonction (21) adjoint à l'autre circuit d'acheminement des signaux (22), lesdits points de jonction étant reliés avec le troisième point de jonction (18) adjoint à un circuit d'acheminement des signaux (23) et avec le quatrième point de jonction (19) adjoint à l'autre circuit d'acheminement des signaux (22), et étant disposés sur les deux sorties du canal du système régulateur de surveillance de porte (2).

4. Dispositif selon l'une ou l'autre des revendications 1 à 3, caractérisé en ce que les deux entrées du système régulateur d'air sous pression (36) sont disposées sur les troisième et quatrième points de jonction (18; 19) de manière à assurer la connexion et sont reliées avec les deux sorties du canal du système régulateur de surveillance de porte (2).

5. Dispositif selon l'une ou l'autre des revendications 1 à 3, caractérisé en ce que à une entrée séparée des deux régulateurs manométriques de pression de la cabine (8; 9), des deux thermorégulateurs de la cabine (12; 13) et du système régulateur d'air sous pression (36) est prévu un raccordement (24, 25, 26, 27, 37) permettant de prélever sélectivement les informations correspondantes destinées à déterminer la situation de la navigation aérienne.

6. Dispositif selon l'une ou l'autre des revendications 1, 4 et 5, caractérisé en ce que le système régulateur d'air sous pression (36) est conçu à partir d'un régulateur d'air sous pression (38) lequel est relié côté sortie avec une soupape d'interruption d'air sous pression (39) de manière à assurer la connexion, les deux entrées du régulateur d'air sous pression (38) étant disposées sur les troisième et quatrième points de jonction (18; 19) de manière à assurer la connexion et étant reliées avec les deux sorties du canal du système régulateur de surveillance de porte (2), à l'entrée séparée du régulateur d'air sous pression (38) étant prévu un raccordement (37) permettant de prélever sélectivement les informations correspondantes destinées à déterminer la situation de la navigation aérienne.
